Europäisches Patentamt

European Patent Office

Office européen des brevets

(19)

(11) Veröffentlichungsnummer: **0 395 948 B1**

(12) **EUROPÄISCHE PATENTSCHRIFT**

(45) Veröffentlichungstag der Patentschrift: **02.03.94**

(21) Anmeldenummer: **90107474.0**

(22) Anmeldetag: **19.04.90**

(51) Int. Cl.5: **G09F 3/02**, G03C 3/00, G11B 23/40

---

(54) **Mit Identifikationsmerkmalen bedruckter Verschlussklebestreifen für Aufzeichnungsträger.**

---

(30) Priorität: **02.05.89 DE 3914432**

(43) Veröffentlichungstag der Anmeldung:
**07.11.90 Patentblatt 90/45**

(45) Bekanntmachung des Hinweises auf die
Patenterteilung:
**02.03.94 Patentblatt 94/09**

(84) Benannte Vertragsstaaten:
**DE FR GB IT**

(56) Entgegenhaltungen:
**DE-A- 3 016 677**
**DE-A- 3 104 351**
**DE-A- 3 402 375**

(73) Patentinhaber: **BASF Magnetics GmbH**
**Dynamostrasse 3**
**D-68165 Mannheim(DE)**

(72) Erfinder: **Scholtysik, Bernd, Dr.**
**Neumarkterstrasse 82B**
**D-8000 München 80(DE)**

(74) Vertreter: **Münch, Volker et al**
**BASF Aktiengesellschaft,**
**Patentabteilung ZDX - C 6**
**D-67056 Ludwigshafen (DE)**

EP 0 395 948 B1

## Beschreibung

Die Erfindung betrifft einen mit Identifikationsmerkmalen bedruckten Verschlußklebestreifen für bahnförmige Aufzeichnungsträger, welcher an mindestens einer Stelle der Bahn über deren gesamte nutzbare Breite aufgeklebt ist, wobei die Identifikationsmerkmale parallel zur Bahnlänge aufgedruckt sind und wobei der bahnförmige Aufzeichnungsträger in Streifen längs geschnitten wird.

Ein derartiger Verschlußklebestreifen ist aus der DE-A-30 16 677 bekannt.

Bei der Herstellung von Aufzeichnungsträgern, beispielsweise fotografischen Filmen, Papieren oder Magnetbändern werden üblicherweise Bahnen von 60 - 240 cm Breite und unterschiedlicher Länge hergestellt, indem auf einen flexiblen Schichtträger die fotografischen oder magnetischen Schichten sowie gegebenenfalls auch Rückschichten in einer Gießmaschine in einem oder mehreren Arbeitsgängen aufgebracht werden. Nach dem Trocknen und gegebenenfalls Kalandrieren werden die Aufzeichnungsträger in Schneidemaschinen auf Gebrauchsbreite getrennt und in der gewünschten Länge auf flanschlose Wickelkerne oder Spulen aufgewickelt. Dabei wird das Bandende üblicherweise mit einem Verschlußklebestreifen auf dem Bandwickel festgeklebt.

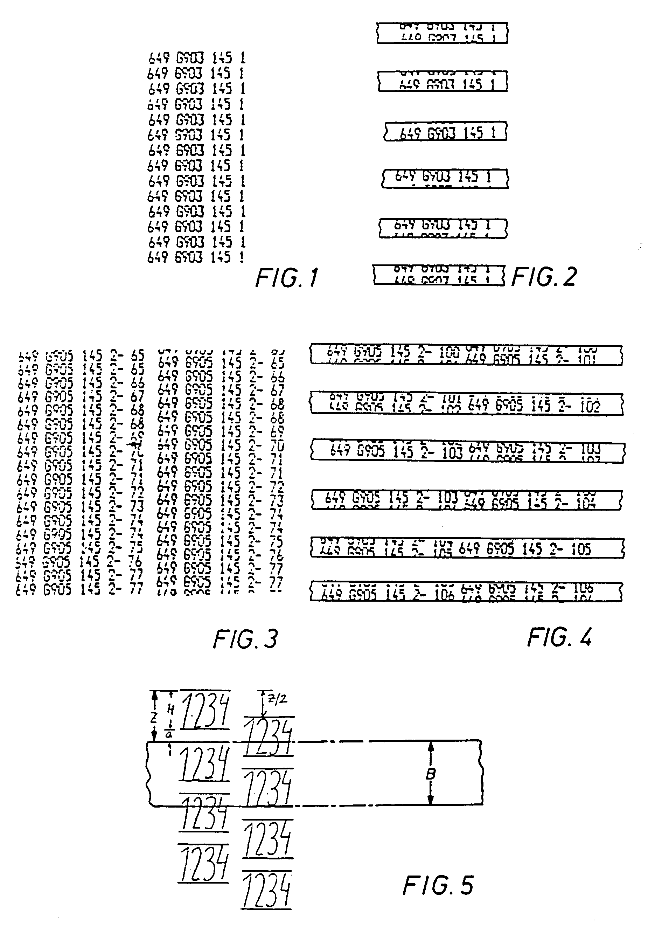

Weiterhin ist bekannt, daß auf dem Verschlußklebestreifen Produktionskennzahlen, beispielsweise Film- oder Magnetbandtyp, Gießmaschine, Zeitpunkt des Begusses, Bandnummer und ähnliches aufgedruckt sind, wobei die Identifikationsmerkmale Zahlen, Buchstaben, Barcode oder ähnliches sind. Die Bedruckung der Verschlußklebestreifen erfolgt üblicherweise vor dem Trennvorgang mit geeigneten Druckern zum Beispiel Nadeldruckern oder Thermotransferdruckern. Dieses Verfahren bereitet bei breiten Streifen, beispielsweise auf Halbzoll (12,7 mm) oder Kleinbildbreite (35 mm) getrennten Bändern keinerlei Schwierigkeiten. Sollen jedoch beispielsweise Magnetbänder auf 3,81 mm Breite geschnitten werden, so ergibt sich die Schwierigkeit, daß wegen der geringen Streifenbreite trotz einer kleinen Schriftgröße das bedruckte Klebeband vor dem Trennvorgang so exakt auf der Bahn positioniert werden muß, daß nach dem Trennen die Bedruckung auf den einzelnen Streifen lesbar bleibt, das heißt nicht zerschnitten ist. Dies ist erklärlicherweise nur sehr schwer durchzuführen, und ein gutes Ergebnis wäre bei diesem Verfahren überhaupt nur erreichbar, wenn der Zeilenabstand der Bedruckung genau der Breite der getrennten Streifen entspricht. Figur 1 zeigt ein Beispiel für diese Form der Bedruckung, bei der nach dem Trennen einzelne Verschlußklebestreifen der Bandwickel nur sehr schlecht lesbar sind, wie aus Figur 2 deutlich zu erkennen.

Daher bestand die Aufgabe, einen Verschlußklebestreifen der eingangs genannten Art zu finden,
- dessen Identifikationsmerkmale auch bei Trennen in schmale Streifen gut lesbar sind,
- wobei die Höhe der Identifikationsmerkmale möglichst groß sein soll,
- wobei der vertikale Zeilenabstand der Identifikationsmerkmale nicht unbedingt gleich der Streifenbreite sein soll.

Erfindungsgemäß wurde die Aufgabe gelöst mit einem bedruckten Verschlußklebestreifen mit den im kennzeichnenden Teil des Anspruchs 1 genannten Merkmalen. Weitere Einzelheiten der Erfindung gehen aus den Unteransprüchen, der Beschreibung und den Zeichnungen hervor.

Die zur Erläuterung der Erfindung beigefügten Zeichnungen stellen dar:

Figur 1      Verschlußklebestreifen mit aufgedruckten Identifikationsmerkmalen auf einem bahnförmigen Aufzeichnungsträger gemäß dem Stand der Technik

Figur 2      Verschlußklebestreifen wie in Figur 1 bei mehreren auf Gebrauchsbreite getrennten Aufzeichnungsträgern

Figur 3      Verschlußklebestreifen mit Identifikationsmerkmalen gemäß der vorliegenden Erfindung auf einem bahnförmigen Aufzeichnungsträger

Figur 4      Verschlußklebestreifen gemäß Figur 3, jedoch nach Längstrennen des Aufzeichnungsträgers in schmale Streifen

Figur 5      schematische Darstellung der Geometrie der Identifikationsmerkmale gemäß Figur 3 und Figur 4.

Das Wesen der Erfindung besteht darin, daß die gleichen Identifikationsmerkmale zeilenweise übereinander und gleichzeitig in n aufeinanderfolgenden Spalten aufgedruckt werden, wobei jede Spalte um $\frac{1}{n}$ des vertikalen Zeilenabstandes gegen die vorige Spalte in der Höhe versetzt ist und wobei die maximale Höhe der Identifikationsmerkmale auf dem Verschlußklebestreifen

$$H_{max} = [n/(n + 1)] \times (B - a/n)$$

beträgt, wobei:

n =      Anzahl der Bedruckungsspalten
B =      Streifenbreite des Aufzeichnungsträgers
a =      Freier Abstand zwischen 2 bedruckten Zeilen (in einer Spalte)
  =      Zeilenabstand Z - Bedruckungshöhe H

Dabei braucht, wie weiter unten nochmals ausgeführt, der Zeilenabstand Z keineswegs mit der Streifenbreite B der getrennten Aufzeichnungsträger identisch zu sein. In Figur 5 sind die geometrischen Zusammenhänge für n = 2 dargestellt.

Die Erfindung wird beispielhaft anhand der Herstellung von 3,81 mm breiten Magnetbandstreifen, wie sie bekanntlich in Compact-Cassetten verwendet werden, erläutert, ohne daß die Erfindung aber darauf beschränkt ist.

Eine etwa 65 cm breite fertig begossene und nachbehandelte Magnetbandbahn größerer Länge durchläuft, aus einer Abwickeleinrichtung kommend, eine aus dem Stand der Technik bekannte Querschneidevorrichtung.

Diese kann beispielsweise aus einem Schneidtisch bestehen, über den senkrecht zur Laufrichtung der Magnetbandbahn ein Schneidrädchen geführt wird, so daß die Bahn getrennt wird. Dann werden die beiden Bahnenden, welche unter Umständen um einige Millimeter oder Zentimeter voneinander beabstandet werden, durch ein Klebeband über die gesamte Breite miteinander verbunden. Dieses Klebeband weist über seinen gesamten Bahnverlauf wie in Figur 3 dargestellt, übereinanderliegende Identifikationsmerkmale auf. Diese sind gemäß der vorliegenden Erfindung in zwei identischen Spalten vorhanden, wobei die zweite Spalte gegen die erste um den 1/2 Zeilenabstand vertikal versetzt ist. Nach Herstellung der geschilderten Klebeverbindung wird die Bahn um eine definierte Länge weiter abgewickelt, bis die gewünschte Wickellänge erreicht ist, und die nächste Klebeverbindung wird wie bereits oben beschrieben hergestellt. Die auf diese Weise mit Klebeverbindungen versehene Bahn durchläuft eine ebenfalls aus dem Stand der Technik bekannte Längsschneideeinrichtung, in der rotierende Messer die Bahn in 3,81 mm breite Streifen trennen, die anschließend auf flanschlose Wickelkerne oder Flanschspulen aufgewickelt werden, indem der Streifenanfang auf jedem Kern beziehungsweise jeder Spule aufgelegt oder angeklebt wird und nach Aufwickeln der vorbestimmten Länge das Bandende mit dem erfindungsgemäßen Verschlußklebestreifen festgeklebt wird. Dabei kann zum späteren erleichterten Abnehmen des Verschlußklebestreifens durch den Kunden ein oder beide seitliche Enden des Verschlußklebestreifens klebstoffrei und unter stumpfem Winkel abgeknickt sein. Wie aus Figur 4 zu ersehen, ist bei jedem Bandwickel im Gegensatz zum Stand der Technik (Figur 2) das Identifikationsmerkmal deutlich zu erkennen.

Im dargestellten Fall (2 Bedruckungsspalte) wird die Bahn in etwa 170 Streifen getrennt, daher kann es zweckmäßig sein, zur späteren Identifizierung der einzelnen Bandwickel die Wickelnummern zu kennzeichnen, was im vorliegenden Fall (Figur 3 und Figur 4) durch die letzte Zifferfolge geschieht. Dabei wurden folgende Größen gewählt: B = 3,81 mm, a = 0,5 mm.

Damit ergibt sich nach der oben genannten Formel die maximal mögliche Bedruckungshöhe der Identifikationsmerkmale, bei der eine Druckzeile auf dem Magnetbandwickel immer vollständig sichtbar ist, zu

$$H_{max} = 2/3\ B - a\ 1/3 = 2,37\ mm$$

Der Zeilenabstand Z beträgt

$$Z = H + a = 2,87\ mm$$

Die zweite Spalte ist gegen die erste um 1/2 Z verschoben. Aus diesen Größenangaben geht hervor, daß es mit der vorliegenden Erfindung keineswegs erforderlich ist, daß die Streifenbreite B gleich dem Zeilenabstand Z ist.

Selbstverständlich können im Rahmen der Erfindung die Identifikationsmerkmale ebenso in drei oder mehr Spalten aufgedruckt werden, wobei in diesem Fall jede Spalte gegen die vorige jeweils um 1/3 und so weiter vertikal versetzt ist. Dabei wird, je mehr Spalten nebeneinander aufgedruckt werden, die maximale Bedruckungshöhe immer größer, wie aus einem Vergleich von aufgedruckten Identifikationsmerkmalen in einer beziehungsweise zwei beziehungsweise drei Spalt(en) hervorgeht.

Dabei beträgt (bei a = 0,5 mm und B = 3,81 mm)
bei einer Spalte $H_{max}$ = 1,65 mm
bei zwei Spalten $H_{max}$ = 2,37 mm
bei drei Spalten $H_{max}$ = 2,73 mm.

**Patentansprüche**

1. Durch Bedruckung mit Identifikationsmerkmalen versehener Verschlußklebestreifen für bahnförmige Aufzeichnungsträger, welcher an mindestens einer Stelle der Bahn über deren gesamte nutzbare Breite aufgeklebt ist, wobei die Identifikationsmerkmale parallel zur Bahnlänge aufgedruckt sind und wobei der bahnförmige Aufzeichnungsträger in Streifen längs geschnitten wird, dadurch gekennzeichnet, daß die Identifikationsmerkmale zeilenweise übereinander sowie in n-Spalten nebeneinander angeordnet sind, wobei jede Spalte gegenüber der vorigen um den n ten Teil des Zeilenabstands vertikal versetzt ist und wobei die Höhe der Identifikationsmerkmale

$$H \leq [n/(n + 1)] \times (B - a/n)$$

beträgt, wobei:

$n$ = Anzahl der Bedruckungsspalten
$B$ = Streifenbreite der Aufzeichnungsträger
$a$ = Freier Abstand zwischen zwei Druckzeilen in einer Spalte
= Zeilenabstand Z - Bedruckungshöhe H

**2.** Verschlußklebestreifen nach Anspruch 1, dadurch gekennzeichnet, daß die Identifikationsmerkmale in zwei Spalten nebeneinander angeordnet sind und wobei die zweite Spalte gegenüber der ersten jeweils um den Abstand einer halben Zeile vertikal versetzt ist.

**3.** Verschlußklebestreifen nach Anspruch 1, dadurch gekennzeichnet, daß die Identifikationsmerkmale dreispaltig angeordnet sind, wobei jede Spalte gegen die jeweils vorige Spalte um 1/3 des Zeilenabstandes vertikal versetzt ist.

**4.** Verschlußklebestreifen nach den Ansprüchen 1 bis 3, dadurch gekennzeichnet, daß der bahnförmige Aufzeichnungsträger senkrecht zur Laufrichtung getrennt wird, die Bahnenden gegebenenfalls voneinander beabstandet und mit einem Klebeband verbunden werden, welches die Identifikationsmerkmale zeilen- und spaltenweise enthält, worauf die Bahn in schmale Streifen längs getrennt wird.

**5.** Verschlußklebestreifen nach den Ansprüchen 1 bis 4, dadurch gekennzeichnet, daß die Identifikationsmerkmale Zahlen, Buchstaben oder Barcodes sind und durch Bedrucken auf dem Verschlußklebestreifen aufgebracht werden.

## Claims

**1.** A closing adhesive tape printed with identification marks for recording media in web form, which is adhesively attached at at least one point of the web over the entire usable width of the latter, the identification marks being printed parallel to the length of the web and the recording medium in web form being cut longitudinally into strips, wherein the identification marks are arranged linewise one above the other and in n columns one next to the other, each column being offset vertically with respect to the previous column by the nth part of the line spacing and the height of the identification marks being

$$H \leqq [n/(n + 1)] \times (B - a/n)$$

where:

| | | |
|---|---|---|
| n = | number of printing columns |
| B = | strip width of the recording media |
| a = | free spacing between two print lines in a column |
| = | line spacing Z - printing height H |

**2.** The closing adhesive tape as claimed in claim 1, wherein the identification marks are arranged in two columns one next to the other and the second column is offset vertically with respect to the first column in each case by the spacing of half a line.

**3.** The closing adhesive tape as claimed in claim 1, wherein the identification marks are arranged in three columns, each column being offset vertically from the respectively previous column by 1/3 of the line spacing.

**4.** The closing adhesive tape as claimed in any of claims 1 to 3, wherein the recording medium in web form is separated perpendicularly with respect to the running direction, the web ends are, if appropriate, spaced apart from each other and joined by an adhesive tape which contains the identification marks linewise and column-wise, whereupon the web is separated longitudinally into narrow strips.

**5.** The closing adhesive tape as claimed in any of claims 1 to 4, wherein the identification marks are numbers, letters or bar codes and are applied to the closing adhesive tape by printing.

## Revendications

**1.** Ruban adhésif de fermeture muni par impression de caractères d'identification pour support d'enregistrement en forme de bande qui, sur au moins une zone de la bande, est collé sur toute sa largeur utilisable, les caractères d'identification étant imprimés parallèlement à la longueur de la bande et le support d'enregistrement en forme de bande étant découpé longitudinalement en rubans caractérisé par le fait que les caractères d'identification sont disposés en lignes les uns au dessus des autres et colonnes les uns à côté des autres, chaque colonne étant décalée verticalement de la précédente de la nième partie de la distance entre lignes et la hauteur des caractères d'identification étant

$$H \leqq [n/(n + 1)] \times (B-a/n)$$

avec

| | | |
|---|---|---|
| n = | nombre des colonnes d'impression |
| B = | largeur des rubans du support d'enregistrement |
| a = | distance libre entre deux lignes d'impression dans une colonne |
| = | écart entre lignes Z - hauteur d'impression H |

2. Ruban adhésif de fermeture selon la revendication 1, caractérisé par le fait que les caractéristiques d'identification sont disposés en deux colonnes côte à côte et la deuxième colonne est décalé verticalement par rapport à la première chaque fois de la moitié de la distance entre lignes.

3. Ruban adhésif de fermeture selon la revendication 1, caractérisé par le fait que les caractères d'identification sont disposés sur trois colonnes, chaque colonne étant décalée verticalement par rapport à la précédente chaque fois du tiers de la distance entre lignes.

4. Ruban adhésif de fermeture selon les revendications 1 à 3, caractérisé par le fait que le support d'enregistrement en forme de bande est découpé perpendiculairement à la direction de déplacement, les extrémités de bande sont éventuellement séparées les unes des autres et reliées par une bande adhésive qui contient en lignes et en colonnes les caractères d'identification, après quoi la bande est découpée longitudinalement en rubans étroits.

5. Ruban adhésif de fermeture selon les revendications 1 à 4, caractérisé par le fait que les caractères d'identification sont des chiffres, des lettres ou des codes à barre et sont appliqués par impression sur le ruban adhésif de fermeture

649 G903 145 1
649 6903 145 1
649 G903 145 1
649 G903 145 1
649 6903 145 1
649 6903 145 1
649 6903 145 1
649 6903 145 1
649 G903 145 1
649 6903 145 1
649 6903 145 1
649 6903 145 1
649 G903 145 1
649 6903 145 !

*FIG.1*

*FIG.2*

*FIG. 3*

*FIG. 4*

*FIG. 5*